# EUROPÄISCHE PATENTANMELDUNG

(11) **EP 4 622 088 A1**
(43) Veröffentlichungstag der Anmeldung: **24.09.2025**
(21) Anmeldenummer: 24164516.7
(22) Anmeldetag: 19.03.2024
(51) Int. Cl.: H02M 7/483, H02M 5/458, H02M 1/14, H02M 1/00

(54) **MODULARER ENERGIESPEICHER ZUR ÜBERBRÜCKUNG VON SPANNUNGSEINBRÜCHEN BEI ELEKTRISCHEN ANTRIEBEN**

(71) Anmelder: Innomotics GmbH, 90441 Nürnberg (DE)
(72) Erfinder: Baruschka, Lennart, 30900 Wedemark (DE); Karwatzki, Dennis, 90513 Zirndorf (DE)
(74) Vertreter: Siemens Patent Attorneys

(57) **Zusammenfassung**

Die Erfindung betrifft eine Stromrichterschaltung (4), insbesondere ein M2C-Umrichter mit zumindest zwei Teilumrichtern, einem ersten Teilumrichter, insbesondere einer Gleichrichterbrücke und einem zweiten Teilumrichter, insbesondere einer Wechselrichterbrücke, wobei zumindest der zweite Teilumrichter zumindest ein einen oberen und unteren Zweig aufweisendes Phasenmodul (8) aufweist, dessen Plus-Anschlüsse (P) mit einer positiven Sammelschiene (PS) und deren Minus-Anschlüsse (N) mit einer negativen Sammelschiene (NS) elektrisch leitend verbunden sind, und derart einen Zwischenkreis, insbesondere DC-Zwischenkreis (7) bilden, wobei ein Verbindungspunkt der elektrisch in Reihe geschalteten Zweige eines jeden Phasenmoduls (8) einen Wechselspannungsanschluss (L) bildet,
wobei jeder Zweig des Phasenmoduls (8) zwei oder mehr zweipolige elektrisch in Reihe geschaltete Submodule (12) aufweist,
wobei jedes zweipolige Submodul (12) einen Speicherkondensator (17) aufweist, dem eine Reihenschaltung zweier steuerbarer elektronischer Halbleiterschalter (13, 14), mit jeweils einer antiparallel geschalteten Diode (15,16), elektrisch parallelgeschaltet ist,
und wobei ein Anschluss des Speicherkondensators (17) und ein Verbindungspunkt dieser beiden steuerbaren elektronischen Schalter (13, 14) jeweils eine Klemme (I, II oder II, I) bilden,
wobei der Zwischenkreis, insbesondere DC-Zwischenkreis (7) zumindest einen Speicherzweig (9) mit zumindest zwei Submodulen (12) aufweist, wobei diese Submodule (12) jeweils einen Energiespeicher (10) aufweisen, der zu dem, insbesondere internen Energiespeicher (17) des Submoduls (12) elektrisch parallelgeschaltet ist.

## Beschreibung

Die Erfindung betrifft einen modularen Energiespeicher zur Überbrückung von Spannungseinbrüchen bei elektrischen Antrieben.

In der Antriebstechnik sind zur verlustarmen Umformung elektrischer Energie in mechanische Arbeit eine Vielzahl von Stromrichterschaltungen bekannt. Vor allem im höheren Leistungsbereich werden diese Stromrichterschaltungen zur Steuerung des Energieflusses zwischen dynamoelektrischen Maschinen und Energieversorgungsnetzen, insbesondere bei drehzahlvariablen Antrieben, eingesetzt.

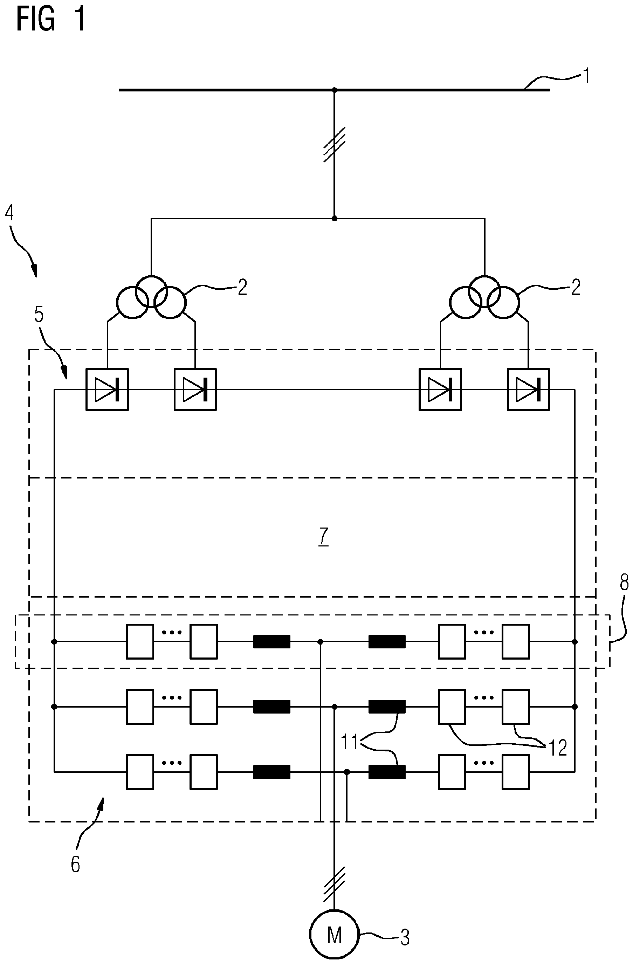

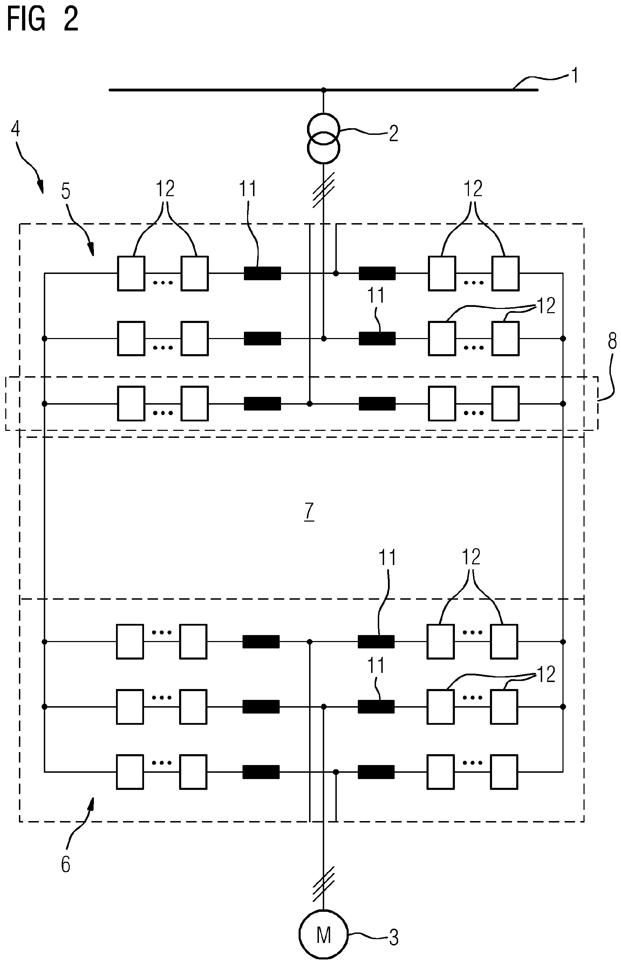

Als bekannte Schaltungen im höheren Leistungs- und Spannungsbereich können modular aufgebaute Stromrichter mit Zwischenkreis gemäß den FIG 1 und 2, auf die in der Figurenbeschreibung näher eingegangen wird, verwendet werden. Der modulare Aufbau mit Zellmodulen ermöglicht das Erreichen höherer Spannungen, als dies mit anderen Schaltungen möglich wäre.

Bei Spannungseinbrüchen im versorgenden Netz kommt es bei Pulswechselrichtern mit Diodeneinspeisung (DFE) des Zwischenkreises - je nach Höhe des Einbruchs - zu einer verminderten Ausgangsspannung am Motor und damit zu einem Verlust der Ausgangsleistung oder sogar zu einem aktiven Bremsen der motorischen Last.

Bei einer aktiven Einspeisung des Zwischenkreises (Active Front End, AFE) kann bei Einbrüchen mit Restspannung zwar noch eine reduzierte Leistung bereitgestellt werden, bei tiefen Spannungseinbrüchen im versorgenden Netz kann es jedoch ggf. sogar zum Abschalten des AFEs führen.

Dies ist insbesondere bei modularen Topologien der Stromrichterschaltungen, wie z.B. der M2C-Topologie kritisch, die auch aus der DE 101 03 031 B4 bekannt ist. Für eine Beschreibung und Erklärung der M2C-Topologie sei auf diese Quelle verwiesen. Ist es zu einem Abschalten gekommen ist ein Wiedereinschalten dieses Stromrichters nicht immer ohne vorherige Vorladung und Formatierungsladung möglich. In diesem Fall fällt der Stromrichter und damit der gesamte Antriebsstrang für mehrere Sekunden aus.

Es besteht daher in der Praxis die Wahl zwischen einer gegen Abschaltung robusten Variante ohne Restmoment mittels DFE und einer weniger robusten Variante mit Restmoment mittels AFE.

Eine robuste Variante mit verfügbarem Restmoment ist nicht bekannt.

Es gibt seit langem bereits den Vorschlag, Energiespeicher in die Zellen des Umrichters zu integrieren. Dies hat jedoch mehrere Nachteile:
So ist bei direkter Einbindung von Speichern in die Modulzwischenkreise der verfügbare Spannungshub des Speichers reduziert, da die minimale Modulspannung begrenzt ist. Dies ist insbesondere bei Kondensatoren als Energiespeicher von Nachteil.

Des Weiteren ist die Skalierung des Speichers schwierig, da die Modulanzahl in der Regel direkt von der Anwendung vorgegeben wird.

Außerdem müssen bei einer Vorladung diese Speicher mit aufgeladen werden, sofern diese nicht über DC/DC Wandler angebunden sind.

Bekannt ist, bei einem einen DC-Spannungszwischenkreis aufweisenden, sogenannten U-Umrichter einen Kondensator oder eine Serienschaltung von Kondensatorbatterien im Zwischenkreis vorzusehen.

Eine Vergrößerung der Kondensatorbatterie zum Zweck der Energiespeicherung bringt mehrere Nachteile mit sich:
- Bei Kurzschluss im DC-Zwischenkreis fließen extrem hohe Entladeströme aus der gleichspannungsseitigen Kondensatoranordnung, die Zerstörungen aufgrund extrem hoher mechanischer Kraftwirkungen und/oder der Lichtbogenwirkung verursachen können.
- Die für die Halbleiterschalter des U-Umrichters erforderliche, sehr kleine Streuinduktivität der Kondensatoranordnung, steht mit steigendem Spannungsniveau und Energieinhalt einer mechanisch kurzschlussfesten und isolationsmäßig sicheren konstruktiven Ausführung immer mehr entgegen.
- Vor Inbetriebnahme des Stromrichters ist im Allgemeinen eine strombegrenzte Vorladung der Kondensatoranordnung auf eine Spannung notwendig, die gleich oder höher als die betriebsmäßige Spannung ist, da andernfalls eine unkontrollierte, kurzschlussartige Aufladung der Kondensatorbatterie aus der Wechselstrom- bzw. Drehstromseite erfolgen kann. Die Hilfsschaltungen für diese Vorladung sind aufwändig, da sie für die hohe (betriebsmäßige) Spannung ausgelegt werden müssen.

Diese Nachteile sind bei hohen Spannungen, die eine Reihenschaltung von Leistungshalbleitern erforderlich machen, besonders gravierend.

Ausgehend davon liegt der Erfindung die Aufgabe zugrunde einen Stromrichter eines elektrischen Antriebs, insbesondere einen Pulswechselrichter in modularer Topologie bereitzustellen, der bei robuster Abschaltung ein Restmoment aufrechterhält und dabei u.a. die oben genannten Nachteile vermeidet.

Diese Aufgabe wird erfindungsgemäß mit den Merkmalen des unabhängigen Anspruchs gelöst.

Vorteilhafte Ausgestaltungen sind den abhängigen Ansprüchen zu entnehmen.

Unter einer erfindungsgemäßen Stromrichterschaltung ist insbesondere eine Stromrichterschaltung zu verstehen, die aus einer Reihenschaltung von Halb- oder Vollbrückenmodulen besteht, wobei in den Modulen Energiespeicher enthalten sind, die eine größere Energiedichte aufweisen als Elektrolytkondensatoren, z.B. SuperCaps oder Akkumulatoren, und die mit dem Zwischenkreis wenigstens eines dreiphasigen Umrichters, im Folgenden als Teilumrichter bezeichnet, so verbunden ist, dass zwischen Umrichter(n) und der beschriebenen Reihenschaltung Energie ausgetauscht werden kann. Diese Reihenschaltung von mit Speichern versehenen Modulen wird im Folgenden als Speicherzweig bezeichnet. Der Zwischenkreis kann als Gleichspannungs- oder Wechselspannungszwischenkreis ausgeführt sein. Die in den Modulen enthaltenen Energiespeicher können entweder direkt an den jeweiligen Modulzwischenkreis angeschlossen sein oder über einen DC/DC Wandler mit eben diesem verbunden sein.

In einer vorteilhaften Weiterbildung der Erfindung handelt es sich bei dem Teilumrichter um eine Stromrichterschaltung, die auch unter der Bezeichnung Modular Multilevel Converter (M2C) bekannt ist. Die Anzahl der im Speicherzweig vorgesehenen Submodule hängt von unterschiedlichen Faktoren, wie beispielsweise der erforderlichen Energiespeicherfähigkeit oder den Anforderungen zur Redundanz des Gesamtsystems ab.

In einer vorteilhaften Weiterbildung der Erfindung ist der Speicherzweig mit dem gemeinsamen Zwischenkreis zweier Teilumrichter verbunden, wobei der erste Teilumrichter mit einem Versorgungsnetz gekoppelt ist und der zweite Teilumrichter eine Last wie z.B. einen Antrieb oder ein zweites Netz versorgt.

In dieser Anordnung kann der Speicherzweig mehrere vorteilhafte Funktionen erfüllen. So ist es möglich, auch tiefe Einbrüche im Versorgungsnetz am ersten Teilumrichter zu überbrücken. Dies gilt sowohl für den Fall, dass der erste Teilumrichter als Diodenbrücke ausgeführt ist - hier hält der Speicherzweig die Zwischenkreisspannung aufrecht, sodass der zweite Umrichter die Last weiter versorgen kann - als auch für den Fall, dass der erste Umrichter als M2C ausgeführt ist - hier entlastet der Speicherzweig den ersten Umrichter, sodass eine zu niedrige Netzspannung oder eine zu große Spannungsänderung mit geringerer Wahrscheinlichkeit zu einer Abschaltung führt. Weiterhin kann der Speicherzweig auch Energie aufnehmen, was beispielsweise im Bremsbetrieb erforderlich ist, wenn keine Energie in das speisende Netz zurückgespeist werden darf oder kann, etwa bei Einsatz einer Diodenbrücke als erster Teilumrichter. Es ist für den Bremsbetrieb somit kein geregelter Widerstand, oft als Chopper bezeichnet, mehr erforderlich.

Mit anderen Worten: Der Stromrichter weist zwei Teilumrichter auf. Einen ersten Teilumrichter an der Wechselspannungsseite bzw. Drehstromseite (in der Regel die Netzseite) zum, insbesondere DC-Zwischenkreis, er kann als Gleichrichterbrücke ausgeführt sein. Einen zweiten Teilumrichter vom, insbesondere DC-Zwischenkreis zur Wechselspannungsseite bzw. Drehstromseite (in der Regel die Lastseite), er kann als Wechselrichterbrücke ausgeführt sein. Der Stromrichter weist also einen Zwischenkreis auf, der über den ersten und zweiten Teilumrichter (Gleichrichterbrücke und Wechselrichterbrücke) zur Lastseite und ggf. Netzseite als Wechselspannungsseite elektrisch verbunden sind. Diese Bezeichnungen betreffen insbesondere die Energiezufuhr aus dem Netz. Z.B. bei Bremsbetrieb des Antriebs kann neben der Aufladung der Speicherzweigmodule im DC-Zwischenkreis zusätzlich - je nach Auslegung des ersten Teilumrichters - auch ins Netz zurückgespeist werden.

Für jeden Potentialanschluss auf der Wechselspannungsseite ist ein Phasenmodul vorhanden. Das Phasenmodul weist wiederum zwei Stromrichterzweige auf, wobei der Verbindungspunkt der beiden in Reihe geschalteten Stromrichterzweige den ausgangsseitigen Potentialanschluss darstellt. Weiterhin weisen die Phasenmodule zumindest mehrheitlich wenigstens eine Zweigdrossel auf, Kreisstrom-Oberschwingungen zu reduzieren. Die Stromrichterzweige weisen eine Reihenschaltung von Submodulen auf. Die Submodule wiederum weisen eine interne Kondensatoreinheit, auch Speicherkondensator genannt, auf.

Jedes Submodul kann an seinen Ausgangsklemmen mindestens die an seinem Kondensator anliegende Spannung oder eine Nullspannung bereitstellen. Die Phasenmodule des Stromrichters sind an einem Ende mit einem ersten, beispielsweise positiven Potentialanschluss verbunden. Das andere Ende der Phasenmodule ist mit einem zweiten, insbesondere negativen Potentialanschluss verbunden. Die Differenz dieser beiden Potentiale stellt die Spannung auf der Zwischenkreisseite bzw. dem DC-Zwischenkreis dar. Die Ausgangswechselspannung bzw. das Ausgangsdrehstromsystem wird aus den ausgangsseitigen Potentialen gebildet.

Erfindungsgemäß erfolgt nunmehr eine Integration eines oder mehrerer Energiespeicher, insbesondere SuperCaps in die mit Submodulen ausgeführten Speicherzweige, jeweils zusätzlich oder in Ersatz zu bereits vorhandenen internen Energiespeichern bzw. Speicherkondensatoren der Submodule. Die Spannung der Energiespeicher kann durch Reihenschaltung einzelner Speicherelemente an die Anforderungen des Submoduls angepasst werden, der Energieinhalt lässt sich durch Parallelschaltung variieren.

Unter erfindungsgemäßen SuperCaps werden elektrochemische Kondensatoren verstanden. Diese sind nur für reine Gleichspannungsanwendungen, z.B. am DC-Zwischenkreis, geeignet. Sie weisen gegenüber Akkumulatoren eine längere Lebensdauer, bei deutlich höherer Leistungsdichte mit hoher Spitzenstrombelastbarkeit auf. Außerdem weisen sie eine vergleichsweise deutlich größere Zyklusfestigkeit bei wartungsfreiem Betrieb auf.

Eine direkte elektrische Anbindung des Speichers an den jeweiligen Modulzwischenkreis ohne einen zwischengeschalteten DC/DC Wandler erlaubt eine größere Anzahl in Reihe geschalteter Speichermodule und einen größeren Spannungshub der einzelnen Speicherelemente. Die minimale Speicher-Summenspannung eines Speicherzweigs sollte größer sein als die maximale DC-Zwischenkreis-Spannung oder als der Spitzenwert der maximalen AC-Zwischenkreis-Spannung.

In einer vorteilhaften Weiterbildung der Erfindung ist der Speicherzweig mittels eines Schalters vom Zwischenkreis trennbar, um entweder Energie unabhängig aufzunehmen oder abzugeben, beispielsweise bei der Vorladung. Da kein Schalten unter Last erforderlich ist, also im Wesentlichen nur stromloses Schalten erfolgt, kann der Schalter aufwandsarm als Trenner ausgeführt sein.

Vorteilhafterweise ist, je nach Anwendung, auch eine Parallelschaltung mehrerer Speicherzweige im DC-Zwischenkreis möglich. Somit kann zur Skalierung des Energieinhalts sowohl die Reihenschaltzahl von Speichermodulen im einzelnen Speicherzweig variiert werden als auch die Anzahl parallel geschalteter Speicherzweige. Regelungstechnisch ist es sinnvoll, aber nicht zwingend notwendig, die Parallelschaltung über Drosseln zu entkoppeln. Beim M2C in den Phasenmodulen verwendete Zweigdrosseln können auch hier verwendet werden.

Die SuperCaps können, mit Abstrichen bei auf den Energieinhalt bezogener Leistungsfähigkeit und Spitzenstrombelastbarkeit, auch durch Batterien ersetzt werden.

So ergibt sich besonders im Zusammenhang mit einer geeigneten Steuereinheit ein optimales Betriebsverhalten elektrischer Antriebe - auch bei den oben erwähnten Netzstörungen - indem - erfindungsgemäße Speicherzweige mit z.B. SuperCaps aufweisenden Submodulen am Zwischenkreis vorgesehen sind.

Bei Pulswechselrichtern mit Diodeneinspeisung (DFE) des DC-Zwischenkreises bleibt somit auch bei Spannungseinbrüchen im versorgenden Netz die Ausgangsspannung am Motor konstant. Ein Verlust der Ausgangsleistung oder gar ein aktives Bremsen der motorischen Last wird vermieden.

Durch den Aufbau der Speicherzweige ergibt sich eine modulare Erweiterbarkeit für nahezu beliebige Reihenschaltzahlen identischer Submodule und somit derer Speichern, insbesondere mit SuperCaps.

Außerdem stellt sich erfindungsgemäß eine zumindest verminderte Fehlerfortpflanzung bei Ausfall oder Fehlansteuerung von Halbleiterschaltern der Submodule in den Speicherzweigen im Vergleich zu einem direkt im Zwischenkreis verbauten Speicher ein. D.h., auch bei einer hohen Anzahl von Submodulen, insbesondere in den Speicherzweigen, besteht eine sichere Möglichkeit der Nutzung von Redundanz innerhalb des jeweiligen Speicherzweigs, beispielsweise durch den Einsatz von Bypassschaltern an den Submodulklemmen.

Durch den erfindungsgemäßen Aufbau der Speicherzweige kann zusammen mit einer dementsprechenden Ansteuerung eine gleichmäßige Spannungsverteilung über die Energiespeicher bzw. deren SuperCaps-Modulen gewährleistet werden.

Die Erfindung ist nicht allein auf den Einsatz von Speicherzweigen in der M2C-Technologie beschränkt. Derartige Speicherzweigmodule können auch als Speicher in anderen DC-Zwischenkreisen eingesetzt werden.

Ebenso können derartige Speicherzweigmodule mit ggf. dementsprechenden Anpassungen auch in AC-Zwischenkreisen angeordnet werden.

Die als Supercaps ausgeführten Energiespeicher können den bereits vorhanden Kondensator, insbesondere Folienkondensator des Submoduls ersetzen oder zusätzlich vorhanden sein.

Die Supercaps sind optional auch mit einem Snubber ausgeführt.

Räumlich betrachtet sind die Supercaps außerhalb des Submoduls angeordnet oder im Submodul integriert.

Die Erfindung sowie weitere vorteilhafte Ausgestaltungen der Erfindung werden anhand prinzipiell dargestellter Ausführungsbeispiele näher erläutert, darin zeigen:
- FIG 1: Stromrichterschaltung eines Antriebs mit Diodeneinspeisung (DFE) eines DC-Zwischenkreises,
- FIG 2: Stromrichterschaltung eines Antriebs mit aktiver Einspeisung eines DC-Zwischenkreises (Active Front End, AFE),
- FIG 3, 4, 9: Prinzipschaltbilder von Submodulen,
- FIG 5: Phasenmodul auf Gleichrichter- oder Wechselrichterseite,
- FIG 6: Speicherzweigmodul,
- FIG 7: Stromrichterschaltung eines Antriebs mit Diodeneinspeisung (DFE) eines DC-Zwischenkreises mit Speicherzweigmodul,
- FIG 8: Stromrichterschaltung eines Antriebs mit aktiver Einspeisung eines DC-Zwischenkreises (Active Front End, AFE) mit Speicherzweigmodul.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können nahezu beliebig kombiniert werden. Ebenso sind auch Einzelmerkmale der jeweiligen Ausführungen kombinierbar, ohne das Wesen der Erfindung zu verlassen.

FIG 1 zeigt eine Stromrichterschaltung mit Pulswechselrichtern mit Diodeneinspeisung (DFE). Dieser modulare Multilevel-Stromrichter wird aus einem Energieversorgungsnetz gespeist und die Netzspannung mit Hilfe einer Transformatoranordnung 2 angepasst. Mit Hilfe beispielsweise einer Diodenbrücke bzw. Gleichrichterbrücke 5 wird die Wechselspannung einer Sammelschiene 1 eines Energieversorgungsnetzes in eine Gleichspannung gewandelt. Die Dioden laden dabei als Bestandteile der Gleichrichterbrücke 5 einen Zwischenkreis 7 auf. Eine Wechselrichterbrücke 6 ist an den Zwischenkreis 7 angeschlossen. Die Wechselrichterbrücke 6 weist Phasenmodule 8 auf, mit jeweils einer Vielzahl von Submodulen 12.

Die Submodule 12 des modularen Multilevel-Stromrichters 4 erzeugen aus dieser Gleichspannung eine Wechselspannung zum Betreiben einer dynamoelektrischen Maschine 3, insbesondere eines Motors. Zur Steuerung oder Regelung des Motors 3 wird die durch die Submodule 12 der Wechselrichterbrücke 6 erzeugte Wechselspannung für den Motor 3 in der Amplitude und Frequenz angepasst. Durch die dargestellten Induktivitäten 11 lässt sich das Steuerverhalten und/oder Regelverhalten des modularen Multilevel-Stromrichters 4 verbessern.

Ein Phasenmodul 8 weist zwei Zweige auf, wobei der Verbindungspunkt der beiden in Reihe geschalteten Zweige den wechselspannungsseitigen Potentialanschluss darstellt. Die Zweige weisen jeweils eine Reihenschaltung von Submodulen 12 auf. Die Submodule 12 wiederum weisen jeweils einen internen Speicher 17 auf. Ein Zweig bezeichnet also ein Submodul 12 oder die Serienschaltung von mehreren Submodulen 12 mit einer Induktivität.

Die Wechselrichterbrücke 6 weist drei Phasenmodule 8 auf, die einem Motor 3 ein Drehstromsystem bereitstellen.

FIG 2 zeigt eine weitere Stromrichterschaltung - mit einem als AFE ausgeführten netzseitigen Umrichter - eines modularen Multilevel-Stromrichters, wobei sowohl in der Gleichrichterbrücke 5 (auch als netzseitiger WR bezeichnet) als auch in der Wechselrichterbrücke 6 (auch als lastseitiger WR bezeichnet) Phasenmodule 8 mit einer Vielzahl von Submodulen 12 vorgesehen sind. Dieser modulare Multilevel-Stromrichter wird aus einem Energieversorgungsnetz gespeist und die Eingangsspannung mit Hilfe einer Transformatoranordnung 2 angepasst. Falls die Spannungen mehr oder weniger "übereinstimmen", können auch Drosseln ausreichen.

Mit Hilfe einer aus Phasenmodulen 8 aufgebauten Gleichrichterbrücke 5 wird die Wechselspannung einer Sammelschiene 1 eines Energieversorgungsnetzes in eine Gleichspannung gewandelt. Die Submodule 12 der Phasenmodule 8 in der Wechselrichterbrücke 6 erzeugen aus dieser Gleichspannung eine Wechselspannung zum Betreiben einer dynamoelektrischen Maschine, insbesondere eines Motors 3. Zur Steuerung oder Regelung des Motors 3 wird die durch die Submodule 12 der Wechselrichterbrücke 6 erzeugte Wechselspannung für den Motor 3 in der Amplitude und Frequenz angepasst. Durch die dargestellten Induktivitäten 11 lässt sich das Steuerverhalten und/oder Regelverhalten des modularen Multilevel-Stromrichters 2 verbessern.

Ein Phasenmodul 8 weist zwei Zweige auf, wobei der Verbindungspunkt der beiden in Reihe geschalteten Zweige den wechselspannungsseitigen Potentialanschluss zur Last oder zum Netz darstellt. Die Zweige weisen jeweils eine Reihenschaltung von Submodulen 12 auf. Die Submodule 12 wiederum weisen jeweils einen internen Speicher 17 auf.

Sowohl die Gleichrichterbrücke 5 als auch die Wechselrichterbrücke 6 weisen jeweils drei Phasenmodule 8 auf.

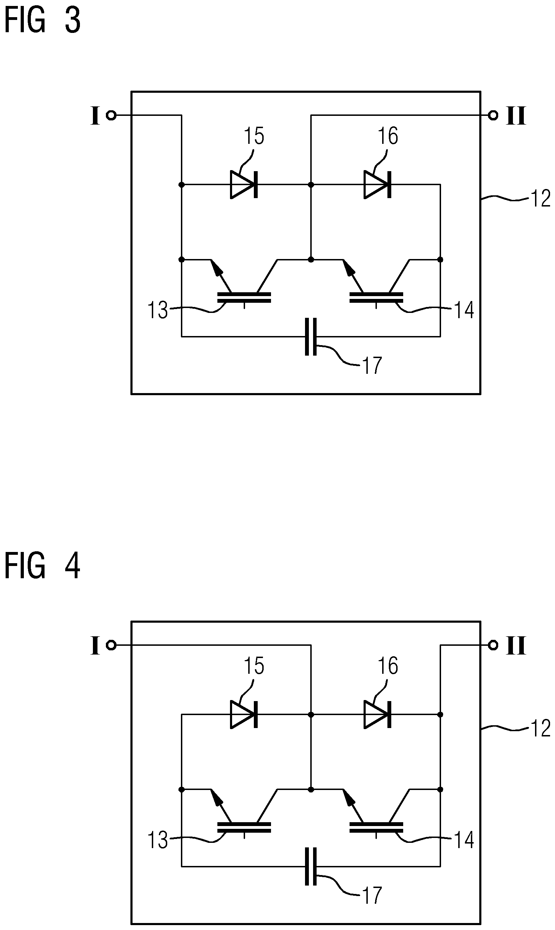

FIG 3 und FIG 4 zeigen jeweils ein Submodul 12. Das Submodul 12 weist mindestens zwei in Reihe angeordnete Halbleiterschalter 13, 14 und einen zu den zwei in Reihe angeordneten Halbleiterschaltern 13, 14 parallel angeordneten internen Speicher 17 auf. Die Klemmen des Submoduls 12 werden im Folgenden mit I und II bezeichnet. Die Potentialdifferenz zwischen diesen Klemmen I, II wird als Klemmenspannung bezeichnet.

Die steuerbaren Halbleiterschalter 13, 14 werden durch Halbleiter wie IGBT oder MOS-Feldeffekttransistoren realisiert. Die dazu antiparallelen Dioden 15, 16 können diskrete Bauelemente oder - wie bei MOS-Feldeffekttransistoren - in der Halbleiterstruktur der steuerbaren Halbleiterschalter 13, 14 integriert sein. Das Submodul 12 weist weiterhin einen Speicher 17 oder eine Kondensatorbatterie aus mehreren Speicherkondensatoren mit einer resultierenden Kapazität auf.

Dabei werden die in Reihe angeordneten Halbleiterschalter 13, 14 im Allgemeinen nicht vom gleichen Strom durchflossen. Mit diesem Submodul 12 lassen sich an den Anschlüssen I, II des Submoduls 12 die Spannung "Null" oder die Spannung am Speicher 17 erzeugen.

Der Halbleiterschalter 13, 14 weist neben einem schaltenden Element, der einen Strom in eine ersten Stromflussrichtung schalten kann, eine Diode 15, 16 auf, die einen Strom in einer zweiten Stromflussrichtung führen kann, die zur ersten Stromflussrichtung entgegengesetzt ist. Diese Diode 15, 16 wird auch als Freilaufdiode bezeichnet.

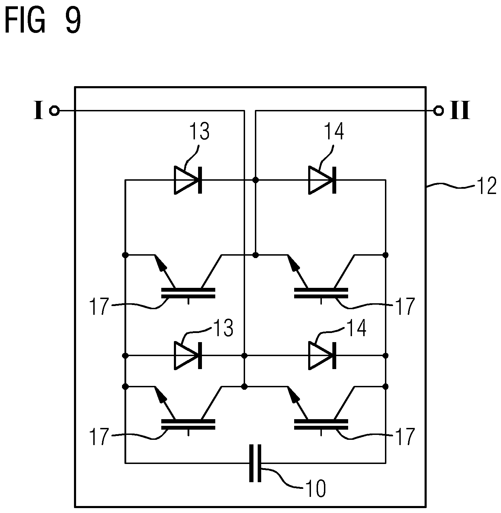

FIG 9 zeigt eine weitere mögliche Variante des Submoduls 12. Konkret weist dieses Submodul 12 hier mindestens zwei in Reihe angeordnete Halbleiterschalter 13, 14, mindestens zwei weitere in Reihen angeordnete Halbleiterschalter 13, 14 und einen zu diesen Reihenschaltungen parallel angeordneten internen Speicher 17 auf. Die Klemmen des Submoduls 12 werden auch hier im Folgenden mit I und II bezeichnet, die Potentialdifferenz zwischen diesen Klemmen I, II wird als Klemmenspannung bezeichnet. Auch ein solches Submodul 12 ist natürlich mit Energiespeicher 10 denkbar, insbesondere auch bei einem AC-Zwischenkreis.

Die Submodule 12 weisen dabei folgende Eigenschaften auf:
Es gibt einen oder mehrere Schaltzustände des Submoduls 12, in denen die Klemmenspannung (bis auf den Durchlassspannungsabfall realer Leistungshalbleiter) unabhängig von der Klemmenstromrichtung den Wert Null annimmt. Des Weiteren gibt es einen oder mehrere Schaltzustände, in denen die Klemmenspannung des Submoduls 12 unabhängig von der Klemmenstromrichtung von Null verschiedene Werte annimmt und das Submodul 12 - je nach Klemmenstromrichtung - Energie aus dem Speicher 17 aufnehmen oder abgeben kann. Außerdem kann es je nach Ausführung des Submoduls 12 einen oder mehrere Schaltzustände des Submoduls 12 geben, in denen die Klemmenspannung abhängig von der Klemmenstromrichtung null ist, sodass das Submodul 12 keine Energie abgibt oder aufnimmt.

FIG 3 und FIG 4 stellen funktional völlig gleichwertige Varianten eines Submoduls 12 dar.

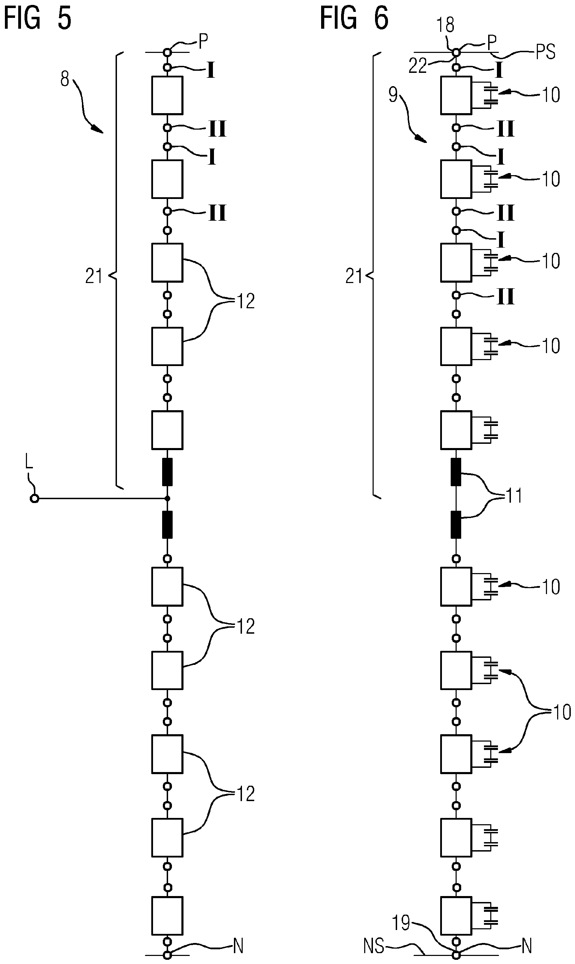

FIG 5 zeigt in etwas detaillierterer Darstellung das Phasenmodul 8, das pro Zweig fünf Submodule 12 (gemäß FIG 3 oder FIG 4) aufweist. Aus je drei Phasenmodulen 8 werden die Wechselrichterbrücken 6 nach FIG 1 bzw. FIG 2 und/oder die Gleichrichterbrücken nach FIG 2 gebildet.

FIG 6 zeigt einen Speicherzweig, der im DC-Zwischenkreis 7 über die Anschlussklemmen 18 und 19 angeordnet ist. Jeweils elektrisch parallel zu den Energiespeichern 17 eines Submoduls 12 des Speicherzweigs 9, ist ein weiterer Speicher 10, insbesondere ein SuperCap-Modul vorgesehen.

Diese SuperCaps sind somit insbesondere als SuperCap-Module ausgeführt, die in einfacher Art und Weise an die Submodule 12 und deren Speicher 17 anbringbar sind. Die als Energiespeicher 10 eingesetzten SuperCaps bzw. SuperCap-Module können einzelne Kondensatoren sein oder sich aus mehreren Teilkondensatoren zusammensetzen, welche die Wirkung eines einzelnen (Gesamt-)Kondensators haben.

Des Weiteren sind diese SuperCaps als elektrochemische Kondensatoren ausgeführt, die nur für reine Gleichspannungsanwendungen, z.B. an einem Modulzwischenkreis oder DC-Zwischenkreis 7, vorgesehen sind. Sie weisen bei deutlich höherer Leistungsdichte mit hoher Spitzenstrombelastbarkeit gegenüber Akkumulatoren eine längere Lebensdauer auf.

Zur Vorladung der Energiespeicher 10 der Submodule 12 der Speicherzweige 9 ist eine nicht näher dargestellte Energiequelle vorgesehen. Dies kann z.B. ein Netzgerät mit Strombegrenzung, eine Batterie mit Vorwiderstand oder einen Transformator mit sekundär angeordnetem Gleichrichter sein. Der Vorladekreis kann erforderlichenfalls durch einen Schalter und/oder eine Gleichrichterdiode erweitert werden. Sehr vorteilhaft ist, verglichen mit einem konventionellen U-Umrichter, dass die Energiequelle nur eine vergleichsweise sehr kleine Spannung aufweisen muss.

Um dies zu erreichen, kann jedes Speicherzweig 9 zwecks Vorladung seines Energiespeichers 10 folgendermaßen gesteuert werden. Die Energiespeichers 10 jedes Submoduls 12 eines Speicherzweig 9 werden nacheinander oder bei mehreren parallel geschalteten Speicherzweigen 9 synchron nacheinander vorgeladen. Bei höherer verfügbarer Vorladespannung können auch mehrere Speichermodule gleichzeitig geladen werden, bei kleiner Vorladespannung kann eine Pulsweitenmodulation im Speicherzweig zum Hochsetzstellen der Vorladespannung genutzt werden.

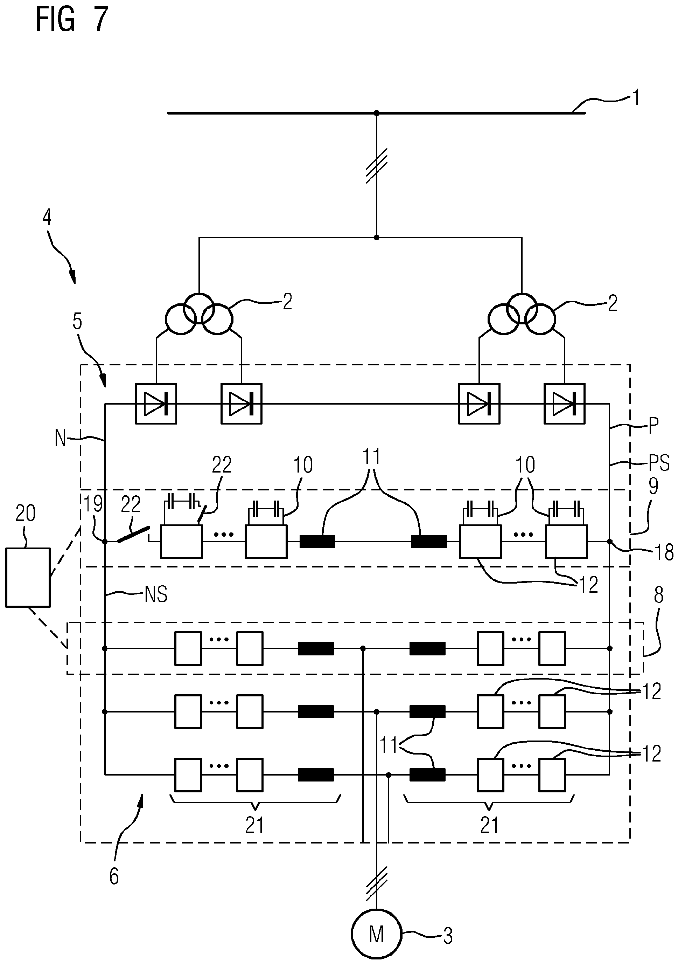

FIG 7 zeigt eine Stromrichterschaltung mit Pulswechselrichtern mit Diodeneinspeisung (DFE) mit einem Speicherzweig 9 im DC-Zwischenkreis 7.

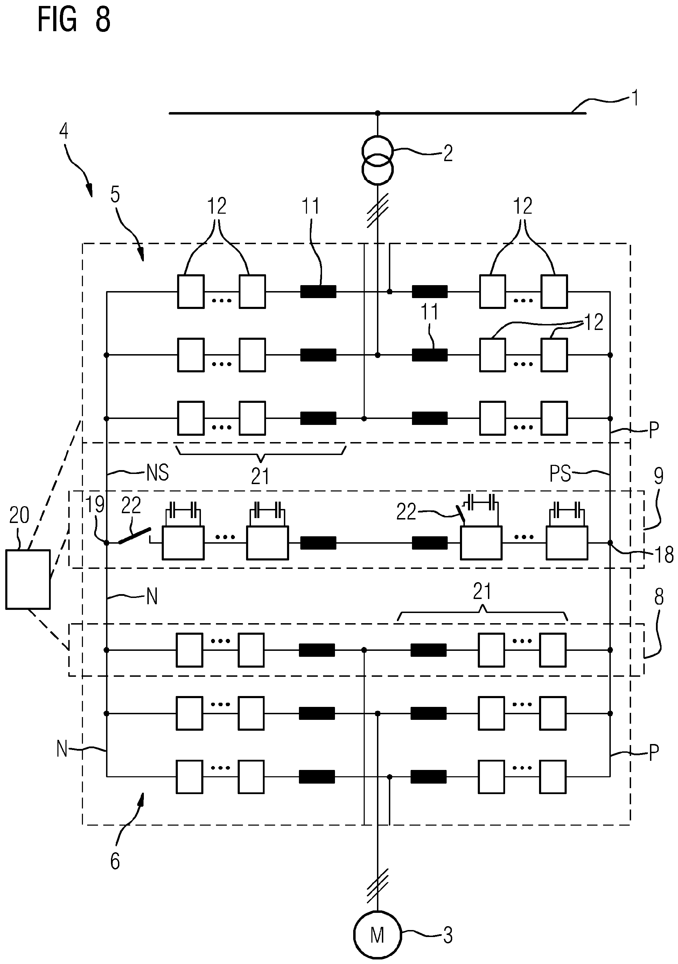

FIG 8 zeigt eine Stromrichterschaltung (AFE) eines modularen Multilevel-Stromrichters 4, wobei sowohl in der Gleichrichterbrücke 5 als auch in der Wechselrichterbrücke 6 Phasenmodule 8 mit einer Vielzahl von Submodulen 12 vorgesehen sind und ein Speicherzweig 9 im DC-Zwischenkreis 7 angeschlossen ist.

Besonders im Zusammenhang mit einer geeigneten Regeleinheit 20 eignet sich ein Speicherzweig 9 mit SuperCaps aufweisenden Submodulen 12 für eine optimale Steuerung elektrischer Antriebe.

Bei Pulswechselrichtern mit Diodeneinspeisung (DFE) des DC-Zwischenkreises 7 bleibt somit auch bei Spannungseinbrüchen im versorgenden Netz die Ausgangsspannung am Motor 3 konstant. Ein Verlust der Ausgangsleistung oder gar ein aktives Bremsen der motorischen Last wird vermieden.

Auch bei einer aktiven Einspeisung des DC-Zwischenkreises (Active Front End, AFE) werden die Spannungseinbrüche nahezu vermieden und die Leistung kann nahezu unvermindert bereitgestellt werden, was ein "Worst-Case-Szenario", wie das Abschalten des AFE verhindert.

Sowohl in den Phasenmodulen 8 als auch in den Speicherzweigen 9 ist die Anzahl der eingesetzten Submodule 12 von der Anwendung vorgegeben. So können pro Zweig zwei, drei, vier, fünf oder mehr Submodule 12 vorgesehen werden.

Die Stromrichterschaltung nach FIG 7 und FIG 8 lässt sich in einzelne, prinzipiell gleichartige Phasenmodule 8 zerlegen, die leistungsseitig jeweils drei Anschlüsse aufweisen. Diese sind folgendermaßen bezeichnet:
- P:: Plusanschluss, welcher mit der positiven Sammelschiene PS der eingeprägten Gleichspannung im DC-Zwischenkreis zu verbinden ist.
- N:: Minusanschluss, welcher mit der negativen Sammelschiene NS der eingeprägten Gleichspannung im DC-Zwischenkreis zu verbinden ist.
- L:: Lastanschluss, welcher mit der wechselstromseitigen Last - z.B. einer Phase eines Wechselstromnetzes oder Drehstromnetzes - zu verbinden ist.

Des Weiteren weisen diese Stromrichterschaltungen Speicherzweig 9 mit folgenden Anschlüssen auf:
- P:: Plusanschluss, welcher mit der positiven Sammelschiene PS der eingeprägten Gleichspannung im DC-Zwischenkreis zu verbinden ist.
- N:: Minusanschluss, welcher mit der negativen Sammelschiene NS der eingeprägten Gleichspannung im DC-Zwischenkreis zu verbinden ist.

Das Potential am Lastanschluss L lässt sich durch entsprechendes Schalten der jeweiligen Submodule 12 auf das Potential von P oder das Potential von N steuern. Durch fortgesetztes Umschalten zwischen diesen beiden Schaltzuständen (Pulsweitenmodulation) lässt sich in bekannter Weise auch ein beliebiger Mittelwert des Potentials zwischen diesen Grenzen einstellen. Dieser Vorgang der Einstellung eines Potential-Sollwerts am Lastanschluss L wird auch als "Spannungsaussteuerung" bezeichnet.

Das gleichspannungsseitig angeordnete Speicherzweig 9 zur Stützung der Gleichspannung des DC-Zwischenkreises 7 ist über ein System von Sammelschienen PS, NS mit den gleichspannungsseitigen Anschlüssen P, N aller Phasenmodule 8 direkt verbunden.

Die Speicherzweige 9 enthalten zu- und abschaltbare interne Energiespeicher, insbesondere Super-Caps.

Die sinnvollerweise von der Regeleinheit 20 genutzten Schaltzustände für das Zu- und Abschalten dieser Energiespeicher, d.h., der SuperCaps 10, sind so gestaltet, dass bei Überspannungen im DC-Zwischenkreis 7 zwischen den Sammelschienen PS und NS eine Energieaufnahme erfolgt. Eine unkontrollierte Energieabgabe, insbesondere bei Kurzschlüssen zwischen PS und NS, hingegen wird verhindert.

Um den Strom- bzw. Energiefluss in oder aus dem Speicherzweig 9 zu kontrollieren, kann die Regeleinheit 20 den Aussteuergrad mit dem Ziel einer bestimmten Summenspannung einstellen.

Erfindungsgemäß werden durch die Speicherzweige 9 auch bei ev. Kurzschlüssen zwischen den Sammelschienen PS, NS des DC-Zwischenkreises 7 stoßartige Entladungen von Energiespeichern 17 der Submodule 12 vermieden.

Außerdem ermöglicht dieser Speicheraufbau am DC-Zwischenkreises 7 den parallelen Betrieb einer nahezu beliebigen Anzahl von Speicherzweigen 9, ohne dass störende Ausgleichsströme zwischen Speicherzweigen 9 und/oder Phasenmodulen 8 am DC-Zwischenkreis 7 auftreten, was u.a. zu Energieverlusten führen könnte.

Ein Merkmal der erfindungsgemäßen Schaltungsanordnungen am DC-Zwischenkreis 7 besteht u.a. darin, dass es mittels der Regeleinheit 20, d.h., durch die Wahl entsprechender Schaltzustände der Submodule 12 des jeweiligen Speicherzweigs 9 und/oder ggf. der Phasenmodule 8 möglich ist, u.a. den Energiefluss zu regeln.

Die Regelbarkeit des Energieflusses lässt sich in äußerst vorteilhafter Weise nutzen, um bei transienten oder periodischen Schwankungen des Leistungsflusses (z.B. des Leistungsflusses zwischen den beiden Wechselstrom- bzw. Drehstromnetzen) die Spannung, insbesondere am Motor 3, konstant zu halten.

In jedem Speicherzweig 9 werden die Spannungen an den SuperCaps durch geeignete Verfahren symmetriert. Dies geschieht beispielsweise über eine messtechnische Erfassung der Spannung am Energiespeicher 10 und indem die Stromrichtung in den einzelnen Zweigen erfasst wird, um die Richtung der Änderungstendenz von jeder der Spannungen am Energiespeicher 10 zu bestimmen.

Es müssen die Submodule 12 von Phasenmodulen 8 und Speicherzweigen 9 nicht identisch ausgeführt sein, sondern sie können auch unterschiedlich realisiert sein. (andere Spannungsebene der Submodule, die aber zusammen natürlich wieder für die DC-Spannung geeignet sein müssen, andere Schaltungen der Submodule, z.B. Vollbrücken/Halbbrückenmodule, andere Halbleiter mit unterschiedlicher Stromtragfähigkeit, andere Speicheransteuerungen...).

Jedes Submodul 12 kann an seinen Ausgangsklemmen mindestens die am Kondensator anliegende Spannung oder eine Nullspannung bereitstellen.

Die Schaltzustände der Submodule 12 der Speicherzweige 9 und/oder der Phasenmodule 8 sowie die Ladezustände ihrer jeweiligen Energiespeicher werden über die Regeleinheit 20 an die erforderlichen Betriebszustände z.B. des Motors 3 angepasst.

Bei dem Submodul 12 gemäß FIG 3 und FIG 4 ist ein erster der zwei Halbleiterschalter 13, 14 zwischen den Anschlüssen des Submoduls 12 angeordnet, wobei ein zweiter der zwei Halbleiterschalter 13, 14 zwischen einem der Anschlüsse des Submoduls 12 und dem internen Kondensator 17 angeordnet ist, wobei zur Erzeugung des ersten Schaltzustands beispielsweise der erste Halbleiterschalter 13 derart angesteuert wird, dass er leitend ist und der zweite Halbleiterschalter 14 derart angesteuert wird, dass er sperrend ist. Darüber hinaus ist der erste Schaltzustand auch dadurch erreichbar, wenn keiner der beiden Halbleiterschalter 13, 14 angesteuert wird.

Der Fall, dass kein Halbleiterschalter 13, 14 in den leitenden Zustand versetzt wird, wird auch als Impulssperre des Submoduls 12 bezeichnet. In Abhängigkeit von der Stromflussrichtung ist dann eine der Freilaufdioden 15, 16 leitend. In diesem Zustand können sich der interne Kondensator 17 und auch der SuperCap aufgrund der Stromflussrichtung nur aufladen und nicht entladen.

Der Energiespeicher 10 muss nicht zusätzlich zum Kondensator 17 des Submoduls 12 vorhanden sein, er kann ihn ggf. auch ersetzen, also z.B. SuperCaps statt Folienkondensatoren, ggf. dann mit einem zusätzlichen Snubber ausgestattet. Auf jeden Fall kann der Energiespeicher 10 in das Submodul 12 auch baulich integriert sein.

Bei einer Ausgestaltung der Erfindung wird der Fehler eines Speichers 10, 17 u.a. dadurch erkannt, dass der Betrag der Spannung des Speichers 10, 17 einen vorgebbaren oberen Grenzwert überschreitet oder einen vorgebbaren unteren Grenzwert unterschreitet.

Die Halbleiterschalter 13, 14, als auch ein Trennschalter 22 werden von einer Regeleinheit 20 angesteuert, der somit u.a. sowohl die Schaltungszustände der Halbleiterschalter 13, 14 als auch der Schaltzustand des Submoduls 12 bekannt sind.

Der Aufbau eines M2C-Umrichters mit erfindungsgemäßen Speicherzweigen 9 eignet sich auch zum gesteuerten Energieaustausch zwischen zwei Drehstromnetzen, z.B. einer HGÜ-Kurzkupplung.

Der M2C-Umrichter könnte ebenso in eine HGÜ integriert werden, um Energie zu speichern, z.B. für die Minutenreserve, oder um Schwankungen von Windparks abzufedern.

### Bezugszeichenliste

- 1: Sammelschiene des Netzes
- 2: Trafoanordnung
- 3: dynamoelektrische Maschine
- 4: Stromrichterschaltung
- 5: Gleichrichterbrücke
- 6: Wechselrichterbrücke
- 7: DC-Zwischenkreis
- 8: Phasenmodul
- 9: Speicherzweig
- 10: Energiespeicher
- 11: Induktivität
- 12: Submodul
- 13: Halbleiterschalter
- 14: Halbleiterschalter
- 15: antiparallele Diode im Submodul
- 16: antiparallele Diode im Submodul
- 17: interner Energiespeicher
- 18: Anschlusselemente Zwischenkreis
- 19: Anschlusselemente Zwischenkreis
- I, II: Klemmen des Submoduls
- 20: Regeleinheit
- 21: Zweig
- 22: Trennschalter
- PS: + Sammelschiene des DC-Zwischenkreises
- NS: - Sammelschiene des DC-Zwischenkreises
- P: Plusanschluss
- N: Minusanschluss
- L: Lastanschluss

## Patentansprüche

1. Stromrichterschaltung (4), insbesondere ein M2C-Umrichter mit zumindest zwei Teilumrichtern, einem ersten Teilumrichter, insbesondere einer Gleichrichterbrücke und einem zweiten Teilumrichter, insbesondere einer Wechselrichterbrücke, wobei zumindest der zweite Teilumrichter zumindest ein einen oberen und unteren Zweig aufweisendes Phasenmodul (8) aufweist, dessen Plus-Anschlüsse (P) mit einer positiven Sammelschiene (PS) und deren Minus-Anschlüsse (N) mit einer negativen Sammelschiene (NS) elektrisch leitend verbunden sind, und derart einen Zwischenkreis, insbesondere DC-Zwischenkreis (7) bilden, wobei ein Verbindungspunkt der elektrisch in Reihe geschalteten Zweige eines jeden Phasenmoduls (8) einen Wechselspannungsanschluss (L) bildet,
wobei jeder Zweig des Phasenmoduls (8) zwei oder mehr zweipolige elektrisch in Reihe geschaltete Submodule (12) aufweist,
wobei jedes zweipolige Submodul (12) einen Speicherkondensator (17) aufweist, dem eine Reihenschaltung zweier steuerbarer elektronischer Halbleiterschalter (13, 14), mit jeweils einer antiparallel geschalteten Diode (15,16), elektrisch parallelgeschaltet ist,
und wobei ein Anschluss des Speicherkondensators (17) und ein Verbindungspunkt dieser beiden steuerbaren elektronischen Schalter (13, 14) jeweils eine Klemme (I, II oder II, I) bilden, wobei der Zwischenkreis, insbesondere DC-Zwischenkreis (7) zumindest einen Speicherzweig (9) mit zumindest zwei Submodulen (12) aufweist, wobei diese Submodule (12) jeweils einen Energiespeicher (10) aufweisen, der zu dem, insbesondere internen Energiespeicher (17) des Submoduls (12) elektrisch parallelgeschaltet ist.

2. Stromrichterschaltung (4), insbesondere ein M2C-Umrichter nach Anspruch 1, **dadurch gekennzeichnet, dass** der Energiespeicher (10) als SuperCap ausgeführt ist.

3. Stromrichterschaltung (4), insbesondere ein M2C-Umrichter nach Anspruch 1, **dadurch gekennzeichnet, dass** der Energiespeicher (10) als Akkumulator ausgeführt ist.

4. Stromrichterschaltung (4), insbesondere ein M2C-Umrichter nach einem der vorhergehenden Ansprüche, **dadurch gekennzeichnet, dass** ein Speicherzweig (9) und/oder die Energiespeicher (10) der jeweiligen Submodule (12) mittels eines Schalters schaltbar sind, um entweder Energie unabhängig aufzunehmen oder abzugeben.

5. Stromrichterschaltung (4), insbesondere ein M2C-Umrichter nach Anspruch 4, **dadurch gekennzeichnet, dass** der Schalter als Trennschalter (22) ausgeführt ist.

6. Stromrichterschaltung (4), insbesondere ein M2C-Umrichter nach einem der vorhergehenden Ansprüche 4 oder 5, **dadurch gekennzeichnet, dass** der Trennschalter (22) über eine Regeleinheit (20) geschaltet wird.

7. Stromrichterschaltung (4), insbesondere ein M2C-Umrichter nach einem der vorhergehenden Ansprüche, **dadurch gekennzeichnet, dass** Submodule (12) der Phasenmodule (8) gleich oder unterschiedlich zu den Submodulen (12) der Speicherzweige (9) ausgeführt sind.

8. Stromrichterschaltung (4), insbesondere ein M2C-Umrichter nach einem der vorhergehenden Ansprüche, **dadurch gekennzeichnet, dass** der erste Teilumrichter, insbesondere die Gleichrichterbrücke (5) als Diodeneinspeisung oder aktive Einspeisung ausgeführt ist.

9. Antrieb mit einer Stromrichterschaltung (4), insbesondere einem M2C-Umrichter nach einem der vorhergehenden Ansprüche, wobei ein Motor (3) an den Anschlüssen des zweiten Teilumrichters, insbesondere der Wechselrichterbrücke (6) elektrisch angeschlossen ist.
